# EUROPEAN PATENT APPLICATION

(11) **EP 4 644 831 A1**
(43) Date of publication of application: **05.11.2025**
(21) Application number: 24770628.6
(22) Date of filing: 05.03.2024
(51) Int. Cl.: G01B 11/06

(54) **CLOSED SPACE MONITORING SYSTEM**

(30) Priority: 10.03.2023 JP 2023037086
(71) Applicant: Agat Co.,Ltd., Tokyo 121-0064 (JP)
(72) Inventor: TAGA Toshiyuki, Tokyo 121-0064 (JP)
(74) Representative: Mathisen & Macara LLP
(86) International application number: PCT/JP2024/008187
(87) International publication number: WO 2024/190518

(57) **Abstract**

A closed space monitoring system capable of measuring the thickness of deposit adhering in a closed space using an imaging portion and a light emitting portion is provided. An observation portion 15 includes an imaging portion 15b capable of capturing an image of an inner wall D3 of a tube wall D1 of a duct D, and a light emitting portion 15c that emits laser light H. In a second state in which the observation portion 15 is stopped at a predetermined position by control of a drive portion by a control portion, the light emitting portion 15c emits laser light H, and this laser light H passes through a coupling portion 16b, is reflected by a mirror surface portion 16d, and is directed to the inner wall D3. A processing circuit portion of the control portion transmits a captured image captured by the imaging portion 15b to an external apparatus, and this external apparatus measures coordinates of a barycenter point based on the received captured image. The amount of movement of the coordinates of this barycenter point is measured by comparison with reference coordinates, and when the amount of movement exceeds a threshold value, it is determined that a state has arisen in which there is a risk of ignition within the duct D, and an operator is notified.

## Description

### Technical Field

The present invention is directed, for example, to a closed space monitoring system that measures the thickness of deposit adhering to the inner surface of a closed space such as the inside of a duct.

### Background Art

PTL 1 discloses a fire detection system in which a visible light camera is installed in a duct for exhausting oily smoke and the like generated in a kitchen and the like, and the duct is monitored for abnormalities from the outside via this visible light camera.

In such a monitoring system that allows the inside of a duct to be monitored using a visible light camera, an operator can check the condition of the oily smoke flowing inside the duct, the oil adhering to the wall surface of the duct, or the oil adhering to a fire damper that is installed near the visible light camera and has the function of closing the flow passage, through an image from the visible light camera.

Furthermore, when there is a large amount of oil-containing deposit on the wall surface, it becomes more likely to ignite and will burn violently in the event of ignition. Thus, when there is a large amount of oil adhering to the wall surface, performing maintenance inspections including cleaning and the like can prevent a fire from breaking out inside the duct.

### Citation List

### Patent Literature

PTL 1: JP2020-521193A

### Summary of Invention

### Technical Problem

However, when the visible light camera, which is an observation portion installed in the duct mentioned above, is used for a long period of time in the smoke generated in the kitchen or the like, dirt such as oil adheres to the lens and makes it difficult to monitor the situation inside the duct.

Another problem is that it is difficult to determine the degree of the amount of deposit accumulated on the wall surface from an image that is obtained by imaging the inside of the duct and in which a certain amount of deposit adheres.

This problem of deposit adhering to the wall surfaces of closed spaces occurs not only in ducts in kitchens and the like, but also in ducts for carrying in and out grain power such as wheat flour, and in ducts in factories and the like that exhaust iron powder and the like generated during product processing.

The object of the present invention is to solve the above-mentioned problems and to provide a closed space monitoring system that prevents adhesion of dirt to a lens of an observation portion and is capable of measuring the thickness of deposit adhering in a closed space using an imaging portion and a light emitting portion.

### Advantageous Effects of Invention

According to a closed space monitoring apparatus according to the present invention, by advancing an observation portion, which monitors the inside of a closed space, into the closed space only when necessary, it is possible to prevent adhesion of dirt such as oil to a lens of the observation portion. Also, by using an imaging portion and a light emitting portion of the observation portion to measure the thickness of deposit adhering in the closed space, it is possible to determine the timing at which cleaning of the closed space is necessary, thereby preventing the outbreak of a fire caused by adhering flammable deposit.

### Brief Description of Drawings

[FIG. 1] FIG. 1 is a configuration diagram of a closed space monitoring system including a closed space monitoring apparatus attached to a duct of Embodiment 1.
[FIG. 2] FIG. 2 is a configuration diagram showing a state in which an observation portion is advanced into the duct.
[FIG. 3] FIG. 3 is a partially enlarged configuration diagram of the closed space monitoring apparatus in the state shown in FIG. 2.
[FIG. 4] FIG. 4 is a partially enlarged configuration diagram of a closed space monitoring apparatus of a different embodiment.
[FIG. 5] FIG. 5 is an explanatory diagram of a captured image that is captured.
[FIG. 6] FIG. 6 is a diagram showing the correlation between the amount of movement of a barycenter point and the thickness of dirt on an inner wall.
[FIG. 7] FIG. 7 is a configuration diagram of a closed space monitoring system according to Embodiment 2.
[FIG. 8] FIG. 8 is a configuration diagram showing a state in which an observation portion is advanced into a duct.

### Description of Embodiments

The present invention will now be described in detail with reference to the illustrated embodiments.

### Embodiment 1

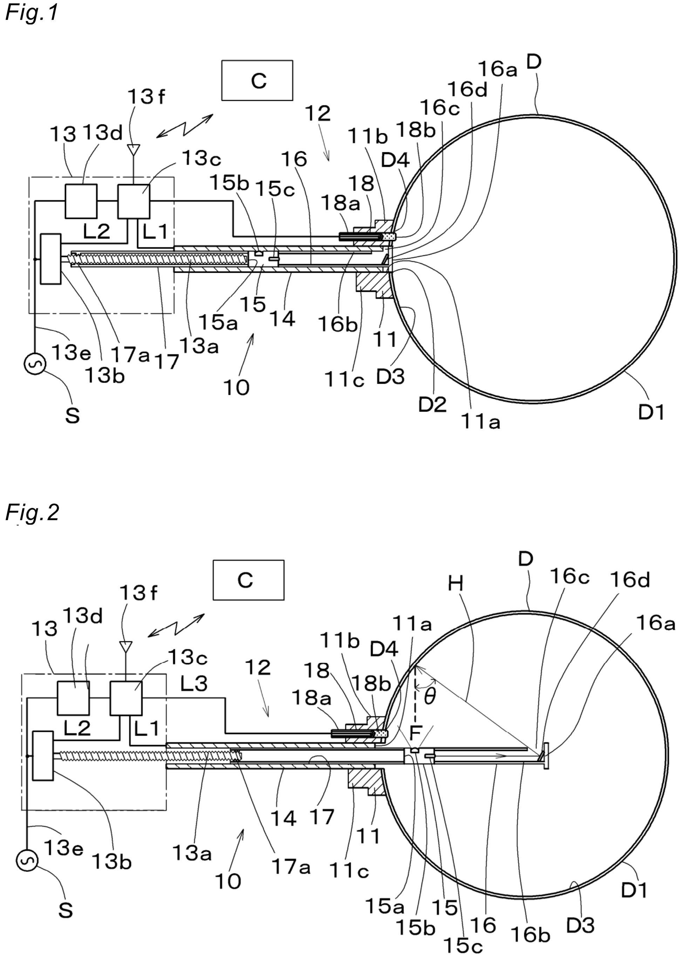

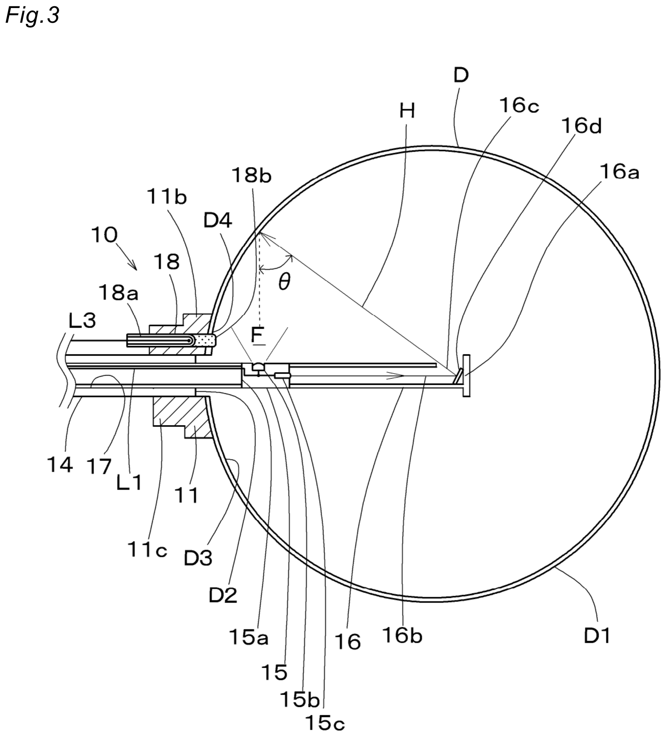

FIG. 1 is a configuration diagram of a closed space monitoring system including a closed space monitoring apparatus attached to a duct D of Embodiment 1, FIG. 2 is a configuration diagram of the closed space monitoring system in a state in which an observation portion is advanced into the duct D, and FIG. 3 is a partially enlarged configuration diagram of the closed space monitoring apparatus in the state of FIG. 2.

The duct D, in which a closed space monitoring apparatus 10 is installed, forms a closed space, is an exhaust pipe installed in a kitchen and the like to exhaust smoke generated during cooking to the outside, and exhausts high-temperature smoke containing oil or the like to the outside. Also, the duct D, which is a closed space, may be a duct for carrying in and out grain power and the like, or a duct that is installed in a factory and the like and exhausts iron powder and oil-containing dust generated during product processing.

Additionally, a fire damper (not shown) is placed in each section within the duct D. When a fire breaks out within the duct D, the heat from the fire melts the heat-sensitive melting member of the fire damper, releasing the urging force and causing the blade portion of the fire damper to rotate 90 degrees, thereby closing the smoke flow passage of the duct D. The fire damper closes the flow passage in this manner, so that the spread of fire to the downstream side of the fire damper can be prevented.

In FIG. 1, the duct D has a circular cross section perpendicular to the flow of smoke, but it may have any other suitable cross-sectional shape other than a circular shape, such as a rectangular tube.

The closed space monitoring system includes a closed space monitoring apparatus 10, which is placed in a closed space, and an external apparatus C, which communicates with this closed space monitoring apparatus 10. The closed space monitoring apparatus 10 mainly includes a holding portion 11, which is fixed to the outside of a tube wall D1 of the duct D and has a through-hole 11a in the center that is inserted through an insertion hole D2 of the duct D, a main body portion 12, which is attached within the through-hole 11a and has a cylindrical outer shape, and a fixed control portion 13, which is coupled to the rear end of the main body portion 12.

The holding portion 11 includes a disk-shaped flange 11b, which is fixed from the outside to the tube wall D1 by screws, rivets, and the like, and a short tubular portion 11c, which extends outward from the center of the flange 11b relative to the tube wall D1. The through-hole 11a is formed within this short tubular portion 11c.

On the other hand, the main body portion 12 includes a guide tube 14, which communicates with the insertion hole D2 and is fixed within the through-hole 11a, an observation portion 15, which can slide back and forth within the guide tube 14, that is, along the longitudinal direction of the guide tube 14, and a distal end portion 16, which is connected to the front side of the observation portion 15 and slides within the guide tube 14 together with the observation portion 15.

Also, a movable tube 17, which is movable along the longitudinal direction, is non-rotatably connected to a rear end portion 15a of the observation portion 15, and a worm gear 13a of a control portion 13, which is described below, is inserted in this movable tube 17. A meshing portion 17a is formed inside the movable tube 17 to mesh with the helical tooth portion provided on the worm gear 13a.

The observation portion 15 includes an imaging portion 15b, which is capable of capturing an image of the inner wall D3 of the tube wall D1 of the duct D, and a light emitting portion 15c, which is placed frontward of the imaging portion 15b. The lens of the imaging portion 15b is positioned facing upward so as to capture an image of the inner wall D3 of the tube wall D1 of the duct D.

The light emitting portion 15c is placed at the distal end of the observation portion 15 so as to emit a red laser beam having a wavelength of 650 nm, for example, forward in the longitudinal direction of the guide tube 14. A signal line L1 from the imaging portion 15b and the light emitting portion 15c is connected to the control portion 13 through the inside of the guide tube 14.

The distal end portion 16 includes a disk-shaped sealing portion 16a, which fits into the side of the through-hole 11a corresponding to the duct D and seals the distal end of the guide tube 14 relative to the duct D, and a tubular coupling portion 16b, which extends rearward from the sealing portion 16a and has a smaller outer diameter than the sealing portion 16a. The sealing portion 16a and the coupling portion 16b are made of a heat-insulating material such as ceramic having a low thermal conductivity, and the rear end of the coupling portion 16b is coupled to the observation portion 15.

The light emitting portion 15c is attached to the distal end of the observation portion 15 so as to emit laser light inside the tube of the coupling portion 16b, and a window portion 16c opening upward is provided in the side surface in the vicinity of the coupling point of the coupling portion 16b with the sealing portion 16a. A mirror surface portion 16d is placed at an angle on the inner side of the sealing portion 16a within the coupling portion 16b below the window portion 16c.

The control portion 13 includes a worm gear 13a, which has a tooth portion engraved on a rod-shaped metal member, a drive portion 13b, which includes an electric motor or the like that rotates the worm gear 13a, and a processing circuit portion 13c, which controls the drive portion 13b via a signal line L2 and also controls the imaging portion 15b and the light emitting portion 15c of the observation portion 15 via the signal line L1.

Also, power from an external power source S, such as a commercial power source, is supplied via a power line 13e to the drive portion 13b and to the processing circuit portion 13c via a converter portion 13d. The processing circuit portion 13c includes an antenna 13f, which wirelessly transmits input observation data to an external apparatus C.

The external apparatus C may be a tablet PC or a personal computer, for example, and is capable of managing a plurality of closed space monitoring apparatuses 10. Then, by an operator operating the external apparatus C to control the drive portion 13b via the processing circuit portion 13c, it is possible to obtain measurement data within the duct D.

The closed space monitoring apparatus 10 also includes a temperature measuring portion 18 for measuring the temperature inside the duct D in the main body portion 12 as necessary. The temperature measuring portion 18 uses a thermocouple, thermistor, or the like as a temperature sensing element, its distal end is covered with a protection cylinder 18a, and, further, a sealing member 18b, which is made of a non-conductive material and has a high thermal conductivity, is attached to its distal end.

The protection cylinder 18a and the sealing member 18b are inserted into an auxiliary through-hole, which is separate from the through-hole 11a and is provided in the flange 11b of the holding portion 11, and into an auxiliary insertion hole D4 provided in the tube wall D1 of the duct D. The output of the temperature sensing element is connected to the processing circuit portion 13c of the control portion 13 via a signal line L3 such as a compensating lead wire.

This temperature measuring portion 18 is not necessarily indispensable in the closed space monitoring apparatus 10. However, the temperature data from the temperature measuring portion 18 transmitted through the signal line L3 allows the processing circuit portion 13c of the control portion 13 to detect the temperature in the duct D, and obtaining the temperature data of the temperature measuring portion 18 and the observation data of the observation portion 15 allows the situation in the duct D to be identified more correctly.

The state shown in Fig. 1 is when the operator is not operating the external apparatus C and the closed space monitoring apparatus 10 is in a non-driven state, and the distal end of the guide tube 14 is sealed by the sealing portion 16a of the distal end portion 16, creating a hermetic state. The sealing portion 16a and the coupling portion 16b of the distal end portion 16 are made of a heat-insulating material, and also the coupling portion 16b is long. As such, there is low risk that the temperature inside the duct D is transferred to the observation portion 15, and the observation portion 15 will not be damaged by overheating.

In contrast to the first state of FIG. 1 in which the distal end portion 16 seals and hermetically closes the distal end of the guide tube 14, to monitor the situation in the duct D, the observation portion 15 is advanced from the guide tube 14 into the duct D by operation from the external apparatus C, for example, to be brought into the second state as shown in FIG. 2.

To transition the observation portion 15 from the first state to the second state, the drive portion 13b is driven via the processing circuit portion 13c by operation from the external apparatus C, for example, to rotate the worm gear 13a. The movable tube 17, which includes the meshing portion 17a that engages with the tooth portion of the worm gear 13a, moves frontward following the movement of the worm gear 13a. Also, to prevent the movable tube 17 from rotating, the movable tube 17 has a groove or a ridge that engages with the guide tube 14 and the like, so that the observation portion 15 can move in the forward and backward directions without rotating.

Also, by adjusting the distal end position of the tooth portion of the worm gear 13a to an advancement position of the observation portion 15 suitable for imaging, the observation portion 15 stops at a predetermined position in the second state shown in FIG. 2. As a result, the observation portion 15 captures an image of the inside of the duct D, and also the temperature measuring portion 18 measures the temperature inside the duct D. The captured image and temperature data obtained are stored in the processing circuit portion 13c, and are transmitted to the external apparatus C via the antenna 13f.

When observation by the observation portion 15 is completed, the drive portion 13b is driven to rotate in the reverse direction via the processing circuit portion 13c, so that the observation portion 15 moves rearward. Then, the distal end portion 16 is stored in the guide tube 14, and the sealing portion 16a of the distal end portion 16 seals the distal end of the through-hole 11a, thereby returning to the first state. At this time, since the sealing portion 16a is engaged with the distal end of the guide tube 14, the observation portion 15 does not move further rearward within the guide tube 14.

In this manner, by controlling the drive portion 13b by the processing circuit portion 13c of the control portion 13, the observation portion 15 can be moved together with the distal end portion 16 from the first state, in which the distal end of the guide tube 14 is sealed by the distal end portion 16, to the second state, in which the observation portion 15 advances from the guide tube 14 into the duct D. Alternatively, the observation portion 15 can be moved together with the distal end portion 16 from the second state to the first state.

Even in a non-driven state, which is the first state, it is possible for the temperature measuring portion 18 to measure the temperature inside the duct D, and the obtained temperature data can be stored in the processing circuit portion 13c or periodically transmitted to the external apparatus C. When the temperature data in the duct D indicates an abnormal value in the first state, the processing circuit portion 13c can output an alarm to the external apparatus C, or automatically transition to the second state and obtain a captured image F using the observation portion 15.

In the first state in which the observation portion 15 is in a non-operating state, the lens of the imaging portion 15b is stored in the guide tube 14 and does not come into contact with the smoke flowing through the duct D. Thus, except in the second state in which the lens comes into contact with the smoke flowing inside the duct D, there is no risk of oil or other dirt adhering to the lens.

In the first state, the observation portion 15 is housed in the metal guide tube 14, which is non-flammable. As such, even if a malfunction occurs in an IC chip constituting the observation portion 15, causing a spark due to a short circuit or causing a substrate to burn, the oil-containing deposit on the inner wall D3 of the duct D will not ignite and a fire will not break out inside the duct D.

Then, in the second state in which the observation portion 15 is stopped at a predetermined position within the duct D by control of the drive portion 13b shown in FIG. 2, laser light H is emitted by the light emitting portion 15c of the observation portion 15, and the imaging portion 15b captures an image. The laser light H emitted from the light emitting portion 15c passes through the coupling portion 16b, is reflected by the mirror surface portion 16d, and passes through the window portion 16c to be applied to the inner wall D3 of the tube wall D1.

The imaging portion 15b captures an image instantaneously, and after an image is captured, the drive portion 13b is controlled by the processing circuit portion 13c to immediately return from the second state to the first state in order to reduce adhesion of dirt, such as oil, to the lens.

The installation angle of the mirror surface portion 16d is adjusted so that the laser light H applied to the inner wall D3 is located approximately in the center of the captured image F, relative to the orientation of the lens of the imaging portion 15b shown by the dotted line in FIG. 3 in the second state. In the imaging by the imaging portion 15b, it is preferable that the image of the inner wall D3 illuminated with the laser light H is captured in a reflection direction at an angle of 40° or more, for example. In other words, it is preferable that the reflection angle θ of the laser light H applied to the tube wall D1 at the inner wall D3 in the imaging direction of the imaging portion 15b be 40° or more.

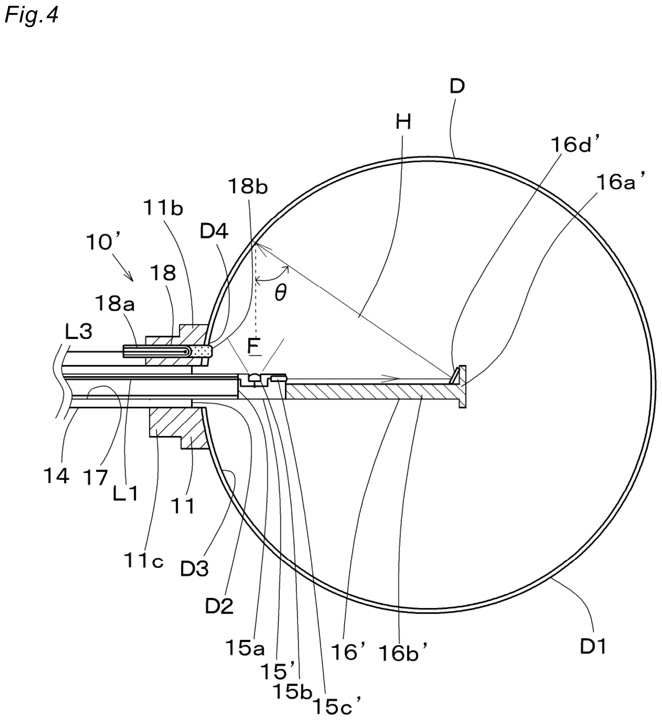

FIG. 4 is a partially enlarged configuration diagram of a closed space monitoring apparatus 10' of a different embodiment, which differs from the closed space monitoring apparatus 10 shown in FIG. 3 in that the coupling portion 16b' of the distal end portion 16' is not tubular, and laser light H emitted frontward from the light emitting portion 15c' of the observation portion 15' is applied along the side surface of the coupling portion 16b' and reflected by the mirror surface portion 16d' placed on the inner side of the sealing portion 16a'.

In the closed space monitoring apparatuses 10 and 10' of FIGS. 3 and 4, the angle between the direction of orientation of the lens of the imaging portion 15b and the direction in which the light emitting portion 15c, 15c' emits laser light H is approximately 90 degrees.

Also, as long as the reflection angle θ can be maintained at 40° or more, it is also possible to change the installation position of the light emitting portion 15c. For example, the light emitting portion 15c that emits light in an oblique direction may be placed at the installation position of the mirror surface portion 16d in place of the mirror surface portion 16d.

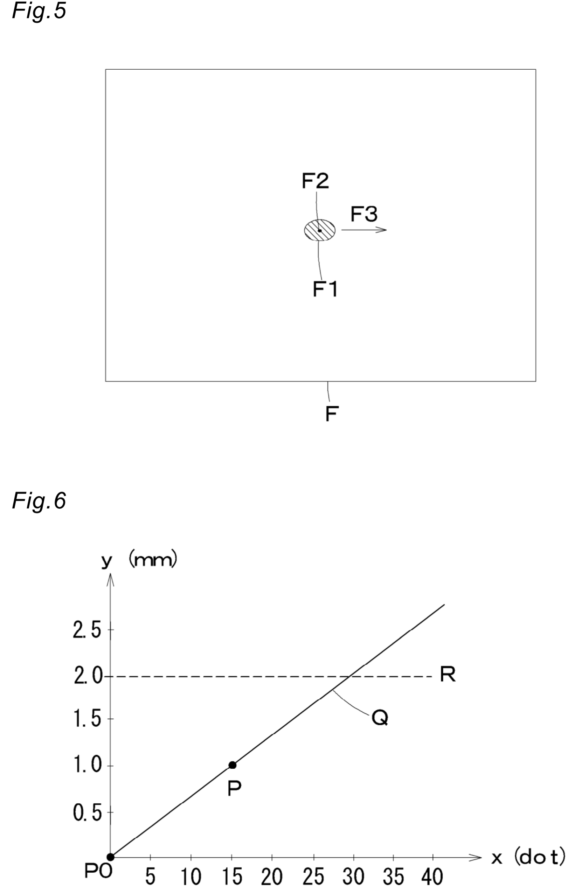

FIG. 5 is an explanatory diagram of an example of a captured image F obtained by imaging the inner wall D3, in which an incident surface region F1 of the laser light H has a reflection direction that varies depending on the thickness y of the deposit adhering to the inner wall D3, and moves to the right as the thickness y increases.

The center portion of the pixels of the substantially circular surface region F1 of the laser light H may be identified as a barycenter point F2. As for this barycenter point F2 with respect to luminance, in the surface region F1 that is brightest at its center, for example, the pixel with the highest luminance can be identified as the barycenter point F2.

In the duct D before deposit, which is dirt such as oil, adheres to it, the closed space monitoring apparatus 10' is placed in the second state, and initial coordinates P on the screen of the barycenter point F2 of the captured image F captured by the imaging portion 15b are stored in advance as reference coordinates P0.

FIG. 6 is a diagram showing the correlation between the amount of movement x of the coordinates P of the barycenter point F2 and the thickness y of the deposit on the inner wall D3. The slope of a line segment Q indicated in this correlation, that is, the degree of accumulation of the deposit, varies depending on the distance from the position of the imaging portion 15b to the inner wall D3 of the duct D, assuming that the resolution of the imaging portion 15b is constant. As such, when the closed space monitoring apparatus 10' is installed in the duct D, it is necessary to preset a line segment Q corresponding to the shape of the duct D and a threshold value R of 2 mm, for example, as a determination value for the thickness y of deposit as initial values.

After the reference coordinates P0, line segment Q, and threshold value R described above are registered and exhaust from the duct D is started, the closed space monitoring apparatus is shifted from the first state to the second state periodically, for example once a day, and the processing circuit portion 13c of the control portion 13 transmits the input imaging portion 15b to the external apparatus C via the antenna 13f.

The external apparatus C measures the coordinates P of the barycenter point F2 based on the received captured image F, and measures the amount of movement x of the coordinates P of the barycenter point F2 by comparison with the pre-stored reference coordinates P0. Then, it is determined whether the amount of movement x has reached the threshold value R, for example, 5 dots. When the thickness y of the deposit exceeds the thickness threshold value R, a notification is given to the operator.

By this notification, the external apparatus C determines that the amount of deposit adhering to the inner wall D3 has increased and a state has arisen in which there is a risk of ignition within the duct D, the exhaust of the duct D is stopped, and oil and the like adhering to the inner wall D3 is removed.

Also, in addition to the external apparatus C performing the process of determining whether the thickness y of the deposit exceeds the threshold value R in association with the amount of movement x of the barycenter point F2 based on the captured image F, the processing circuit portion 13c may perform the determination process, and a notification may be sent to the external apparatus C when the thickness y of the deposit exceeds the threshold value R.

The above-mentioned notification process may be performed automatically on a regular basis, with the operator arranging for cleaning of the duct D only when a notification is received, or the operator may capture images using the imaging portion 15b through regular operation.

### Embodiment 2

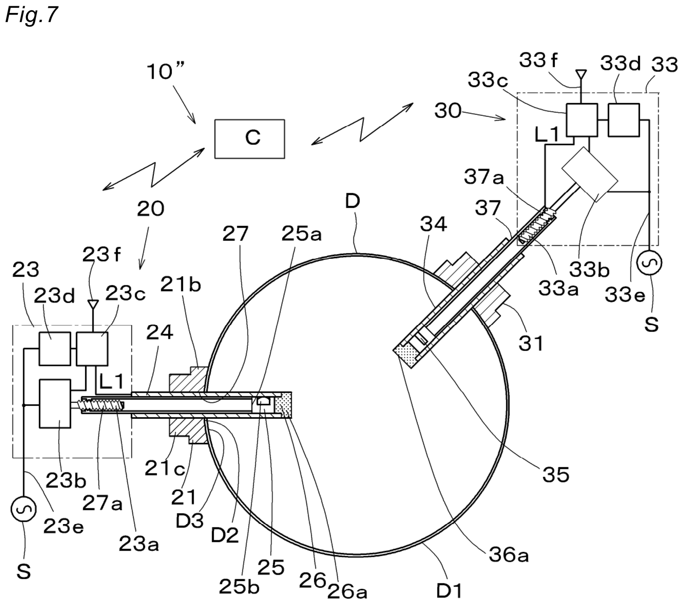

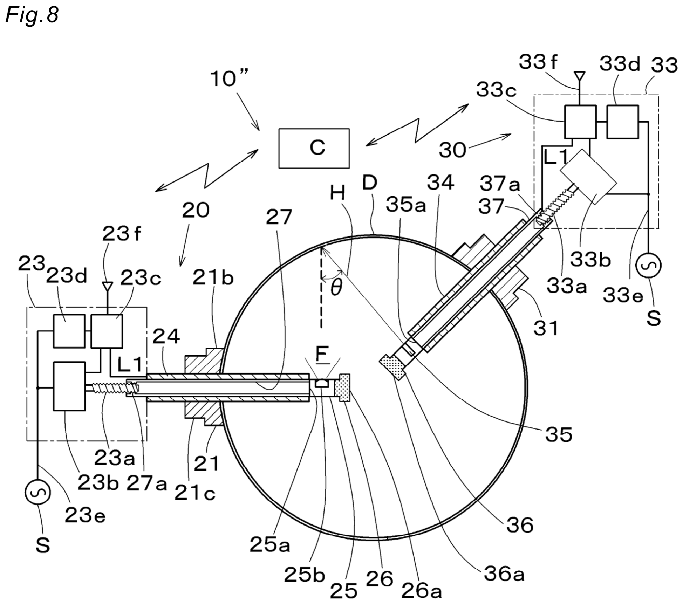

FIG. 7 is a configuration diagram of a closed space monitoring system including a closed space monitoring apparatus 10" of Embodiment 2, and FIG. 8 is a configuration diagram of the closed space monitoring system in a state in which an observation portion and a light emitting portion are advanced into a duct D. The closed space monitoring apparatus 10" includes a main monitoring portion 20 and an auxiliary monitoring portion 30.

The main monitoring portion 20 includes a holding portion 21, which is fixed to the outside of a tube wall D1 of the duct D and has a through-hole 21a in the center that is inserted through an insertion hole D2 of the duct D, a main body portion 22, which is attached within the through-hole 21a and has a cylindrical outer shape, and a fixed control portion 23, which is coupled to the rear end of the main body portion 22.

The main body portion 22 includes a tubular metal guide tube 24, which communicates with the insertion hole D2 and is fixed within the through-hole 21a, an observation portion 25, which can slide back and forth within the guide tube 24, and a distal end portion 26, which is connected to the front side of the observation portion 25 and slides within the guide tube 24 together with the observation portion 25. The distal end portion 26 includes a disk-shaped sealing portion 26a, which seals the distal end of the guide tube 24.

With the closed space monitoring apparatus 10 of Embodiment 1, in the first state shown in FIG. 1 in which the distal end portion 16 seals the distal end of the guide tube 14, the distal end surface of the sealing portion 16a of the distal end portion 16 sealing the insertion hole D2 is flush with the inner wall D3. In contrast, with the closed space monitoring apparatus 10" of Embodiment 2, in the non-driven first state, the guide tube 24 is in a state protruding into the duct D, that is, the observation portion 25 is placed within the duct D at a position approximately one-third of the inner diameter of the duct D.

The observation portion 25 has an imaging portion 25b capable of capturing an image of the inner surface of the tube wall D1 of the duct D. The lens of the imaging portion 25b is positioned facing upward so as to capture an image of the inner wall D3 of the tube wall D1 of the duct D.

Also, in a similar manner to the closed space monitoring apparatus 10 of Embodiment 1, a movable tube 27, which is movable along the longitudinal direction, is non-rotatably connected to a rear end portion 25a of the observation portion 25, and a worm gear 23a of a control portion 23 is inserted in this movable tube 27. A meshing portion 27a is formed inside the movable tube 27 to mesh with the helical tooth portion provided on the worm gear 23a.

The control portion 23 includes the worm gear 23a, which has a tooth portion engraved on a rod-shaped metal body portion, a drive portion 23b, which includes an electric motor or the like that rotates the worm gear 23a, and a processing circuit portion 23c, which controls the drive portion 23b via a signal line and also controls the imaging portion 25b of the observation portion 25 via a signal line L1.

The auxiliary monitoring portion 30 is at the same position as the main monitoring portion 20 in the exhaust direction of the duct D, that is, in the arrangement shown in the cross section of the duct D as shown in FIGS. 7 and 8, it is located on the same plane. Also, a light-emitting-portion holding portion 31 of the auxiliary monitoring portion 30 is attached at a position obliquely upward of the holding portion 21 of the main monitoring portion 20.

In a similar manner to the main monitoring portion 20, the auxiliary monitoring portion 30 includes a light-emitting-portion holding portion 31, which is fixed to the outside of the opposing tube wall D1 of the duct D and has a light-emitting-portion through-hole in the center that is inserted through a light-emitting-portion insertion hole of the duct D, a light-emitting-portion main body portion 32, which is attached within the light-emitting-portion through-hole and has a cylindrical outer shape, and a fixed light-emitting-portion control portion 33, which is coupled to the rear end of the light-emitting-portion main body portion 32.

The difference between the light-emitting-portion main body portion 32 and the main body portion 22 is that, while the device connected at the rear side of the distal end portion 26 of the main body portion 22 is the observation portion 25 including the imaging portion 25b, the device connected at the rear side of the light-emitting-portion distal end portion 36 of the light-emitting-portion main body portion 32 is the light emitting portion 35, and the other configurations are substantially the same.

Furthermore, a light-emitting-portion control portion 33 including a light-emitting-portion worm gear 33a, a light-emitting-portion drive portion 33b, and a light-emitting-portion processing circuit portion 33c, a light-emitting-portion guide tube 34, a light-emitting-portion distal end portion 36, and a light-emitting-portion movable tube 37 of the auxiliary monitoring portion 30 also function in a similar manner to the control portion 23, the guide tube 24, the distal end portion 26, and the movable tube 27 of the main monitoring portion 20.

The measurement process for the thickness y of deposit on the inner wall D3 by the closed space monitoring apparatus 10" first drives the drive portion 23b and the light-emitting-portion drive portion 33b to bring, from the first state shown in FIG. 7, the worm gear 23a and the light-emitting-portion worm gear 33a of the control portion 23 and the light-emitting-portion control portion 33 into the second state shown in FIG. 8, in which the imaging portion 25b and the light emitting portion 35 protrude into the tube wall D1.

In the second state, the light emitting portion 35 emits laser light H to the upper side of the inner wall D3, and the imaging portion 25b captures an image of the inner wall D3 to which the laser light H is applied. The reflection angle θ of the laser light H applied to the tube wall D1 at the inner wall D3 in the imaging direction of the imaging portion 25b is preferably 40° or more, in a similar manner to the closed space monitoring apparatus 10 of Embodiment 1.

The processing circuit portion 23c transmits the captured image F captured by the imaging portion 25b to the external apparatus C, and the external apparatus C performs a process of measuring the thickness y of the deposit based on the received captured image F.

This measurement process is similar to that of the closed space monitoring system of Embodiment 1, and a notification is given to the operator when the thickness y of the deposit exceeds the threshold value R, for example, a thickness of 2 mm.

The guide tube 24 and the light-emitting-portion guide tube 34 of the main monitoring portion 20 and the auxiliary monitoring portion 30 of Embodiment 2 protrude into the duct D. However, in a similar manner to the closed space monitoring apparatus 10 of Embodiment 1, the distal end surfaces of the sealing portion 26a and the light-emitting-portion sealing portion 36a of the distal end portion 26 and the light-emitting-portion distal end portion 36 that seal the respective insertion holes may be movable forward and backward so as to be flush with the inner wall D3.

Also, in the closed space monitoring apparatus 10" of Embodiment 2, the arrangement of a temperature measuring portion 18 that measures the temperature in the duct D is omitted. However, a temperature measuring portion 18 may be installed in the main monitoring portion 20 in a similar manner to the closed space monitoring apparatus 10 of Embodiment 1. Furthermore, a temperature measuring portion 18 may be placed in the auxiliary monitoring portion 30.

In the main monitoring portion 20 and the auxiliary monitoring portion 30 in which the distal end surfaces of the sealing portion 26a and the light-emitting-portion sealing portion 36a are flush with the inner wall D3 as described above, the distal end portion 26 and the light-emitting-portion distal end portion 36 may come into contact with each other in the second state. In such a case, contact between the distal end portions can be avoided by slightly offsetting the main monitoring portion 20 and the auxiliary monitoring portion 30 with respect to the exhaust direction of the duct D.

Thus, according to the closed space monitoring system according to the present invention, by measuring the thickness of deposit adhering to the inner wall D3 of the duct D using the imaging portion 15b and the light emitting portion 15c of the observation portion 15 and the imaging portion 25b and the light emitting portion 35 of the observation portion 25, it is possible to determine the timing at which cleaning of the inside of the duct D is necessary and to prevent the outbreak of a fire caused by a large amount of adhering deposit.

Also, by advancing the observation portions 15, 25 for monitoring the inside of the duct D into the duct D only when necessary, it is possible to prevent dirt, such as oil, from adhering to the lens of the observation portions 15, 25, and to avoid leaving the observation portion 15 in the high-temperature duct D, thereby preventing overheating and avoiding breakdowns.

### Reference Signs List

10, 10', 10: Closed space monitoring apparatus
11, 21: Holding portion
12, 22: Main body portion
13, 23: Control portion
13b, 23b: Drive portion
13c, 23c: Processing circuit portion
14, 24: Guide tube
15, 15', 25: Observation portion
15b, 25b: Imaging portion
15c, 15c', 35: Light emitting portion
16, 26: Distal end portion
16a, 26a: Sealing portion
16b, 16b': Coupling portion
16c: Window portion
16d, 16d': Mirror surface portion
17, 27: Movable tube
18: Temperature measuring portion
18a: Protection cylinder
18b: Sealing member
20: Main monitoring portion
30: Auxiliary monitoring portion
31: Light-emitting-portion holding portion
32: Light-emitting-portion main body portion
33: Light-emitting-portion control portion
33b: Light-emitting-portion drive portion
33d: Light-emitting-portion processing circuit portion
34: Light-emitting-portion guide tube
36: Light-emitting-portion distal end portion
37: Light-emitting-portion movable tube
C: External apparatus
D: Duct
D1: Tube wall
D2: Insertion hole
D3: Inner wall
D4: Auxiliary insertion hole
F: Captured image
F2: Barycenter point
H: Laser light
y: Thickness
x: Amount of movement

## Claims

1. A closed space monitoring system comprising a closed space monitoring apparatus including a holding portion that is to be fixed to an outer surface of a tube wall forming a closed space and has a through-hole that is to communicate with an insertion hole provided in the tube wall, a main body portion fixed to the holding portion, a control portion coupled to a rear end of the main body portion, a light emitting portion that applies a light beam, and an imaging portion that captures an image of an inner wall of the tube wall to which the light beam is applied, and an external apparatus that communicates with the closed space monitoring apparatus, wherein
the main body portion includes a guide tube that is to communicate with the insertion hole and is fixed in close contact with the through-hole, an observation portion that is slidable within the guide tube along a longitudinal direction of the guide tube, and a distal end portion that is connected to a front side of the observation portion and slides within the guide tube together with the observation portion,
the distal end portion includes a plate-shaped sealing portion that is placed on a distal end side and seals a distal end of the guide tube, and a coupling portion that couples the sealing portion and the observation portion,
the light emitting portion is placed in the observation portion on a front side of the imaging portion, and emits the light beam frontward of the guide tube,
an angle between a direction of orientation of a lens of the imaging portion and a direction in which the light emitting portion emits the light beam is approximately 90 degrees,
an inclined mirror surface portion is placed on an inner side of the sealing portion,
the light beam emitted from the light emitting portion and reflected on the mirror surface portion is applied to the inner wall,
a reflection angle of the applied light beam at the inner wall in an imaging direction of the imaging portion is 40 degrees or more,
the control portion includes a drive portion that moves the observation portion, and a processing circuit portion that controls the drive portion and the observation portion and transmits a captured image captured by the imaging portion to the external apparatus, and
the external apparatus measures a thickness of deposit adhering to the inner wall based on an amount of movement on a screen of a center portion of a surface region of the light beam of the received captured image.

2. The closed space monitoring system according to claim 1, wherein
the coupling portion is tubular,
a window portion is provided in a side surface of the coupling portion in a vicinity of a coupling point between the sealing portion and the coupling portion, the mirror surface portion is placed within the coupling portion below the window portion, and
the light beam reflected on the mirror surface portion passes through the window portion and is applied to the inner wall.

3. The closed space monitoring system according to claim 1 or 2, wherein the processing circuit portion controls the drive portion to move the observation portion and a sliding portion from a first state in which the distal end portion seals a distal end of the guide tube to a second state in which the observation portion advances from the guide tube into the closed space.

4. The closed space monitoring system according to claim 3, wherein in the first state, a distal end surface of the sealing portion is flush with an inner surface of the tube wall.

5. A closed space monitoring system comprising a closed space monitoring apparatus including a holding portion that is to be fixed to an outer surface of a tube wall forming a closed space and has a through-hole that is to communicate with an insertion hole provided in the tube wall, a main body portion fixed to the holding portion, a control portion coupled to a rear end of the main body portion, a light emitting portion that applies a light beam, and an imaging portion that captures an image of an inner wall of the tube wall to which the light beam is applied, and an external apparatus that communicates with the closed space monitoring apparatus, wherein
the main body portion includes a guide tube that is to communicate with the insertion hole and is fixed in close contact with the through-hole, an observation portion that is slidable within the guide tube along a longitudinal direction of the guide tube, and a distal end portion that is connected to a front side of the observation portion and slides within the guide tube together with the observation portion,
the control portion includes a drive portion that moves the observation portion, and a processing circuit portion that controls the drive portion and the observation portion and transmits a captured image captured by the imaging portion to the external apparatus,
the external apparatus measures a thickness of deposit adhering to the inner wall based on an amount of movement on a screen of a center portion of a surface region of the light beam of the received captured image,
a light-emitting-portion holding portion that is to be fixed to the outer surface of the tube wall, has a light-emitting-portion through-hole that is to communicate with a light-emitting-portion insertion hole provided in the tube wall, and differs from the holding portion, a light-emitting-portion main body portion that is fixed to the light-emitting-portion holding portion, and a light-emitting-portion control portion coupled to a rear end of the light-emitting-portion main body portion are provided,
the light-emitting-portion main body portion includes a light-emitting-portion guide tube that is to communicate with the light-emitting-portion insertion hole and is fixed in close contact with the light-emitting-portion through-hole, the light emitting portion that is slidable within the light-emitting-portion guide tube along a longitudinal direction of the light-emitting-portion guide tube, a light-emitting-portion distal end portion that is connected to a front side of the light emitting portion and slides within the guide tube together with the light emitting portion, and
the light-emitting-portion control portion includes a light-emitting-portion drive portion that moves the light emitting portion, and a light-emitting-portion processing circuit portion that controls the light-emitting-portion drive portion and the light emitting portion.

6. The closed space monitoring system according to claim 5, wherein the light-emitting-portion holding portion is at a same position as the holding portion in an exhaust direction of the closed space, and the light-emitting-portion holding portion is attached at a position obliquely upward of the holding portion.

7. The closed space monitoring system according to claim 6, wherein the processing circuit portion and the light-emitting-portion processing circuit portion control the drive portion and the light-emitting-portion drive portion to move the observation portion, the light emitting portion, the distal end portion, and the light-emitting-portion distal end portion from a first state in which the distal end portion and the light-emitting-portion distal end portion seal distal ends of the guide tube and the light-emitting-portion guide tube to a second state in which the observation portion and the light emitting portion advance from the guide tube and the light-emitting-portion guide tube into the closed space.

8. The closed space monitoring system according to any one of claim 1, 2, 5, 6, or 7, wherein
an auxiliary through-hole different from the through-hole is provided in the holding portion, an auxiliary insertion hole different from the insertion hole is provided in the tube wall, and
a temperature measuring portion that measures a temperature in the closed space and transmits temperature data to the processing circuit portion is inserted in the auxiliary through-hole and the auxiliary insertion hole, and is provided in the main body portion.

9. The closed space monitoring system according to any one of claim 1, 2, 5, 6, or 7, wherein the light beam is laser light.

10. The closed space monitoring system according to any one of claim 1, 2, 5, 6, or 7, wherein the center portion is a barycenter point with respect to luminance.
